# EUROPÄISCHE PATENTANMELDUNG

(11) **EP 3 315 340 A1**
(43) Veröffentlichungstag der Anmeldung: **02.05.2018**
(21) Anmeldenummer: 17191335.3
(22) Anmeldetag: 15.09.2017
(51) Int. Cl.: B60K 6/52, B60W 10/06, B60W 10/08, B60W 30/18, B60W 30/045

(54) **ANTRIEBSSYSTEM UND VERFAHREN**

(30) Priorität: 15.09.2016 DE 102016217616
(71) Anmelder: Deere & Company, Moline, IL 61265 (US)
(72) Erfinder: Kost, Steffen, 68163 Mannheim (DE); Schott, Florian, 68163 Mannheim (DE); Woopen, Thomas, 68163 Mannheim (DE)
(74) Vertreter: Dehnhardt, Florian Christopher

(57) **Zusammenfassung**

Die Erfindung betrifft ein Antriebssystem und ein Verfahren mit einem Verbrennungsmotor, wenigstens einem Sekundärantrieb, einer Steuerung, die den Betrieb des Sekundärantriebs derart regelt, dass bei Abbremsen einer Fahrzeugachse der zugeordnete Sekundärantrieb rekuperiert, wobei durch den Sekundärantrieb Antriebsleistung an einer Fahrzeugachse rekuperiert, an den weiteren Sekundärantrieb der weiteren Achse übermittelt und an die weitere Achse wieder abgegeben wird.

## Beschreibung

Die Erfindung betriff ein Antriebssystem für ein mehrachsiges Fahrzeug und ein Verfahren.

Es sind verschiedene Antriebsysteme und Verfahren bekannt, mit denen besonders landwirtschaftliche Fahrzeuge betrieben werden.

Landwirtschaftliche Fahrzeuge, insbesondere Traktoren, müssen unterschiedlichen Anforderungen und Fahrsituationen gerecht werden. Diese werden u.a. sowohl für Transportaufgaben, als auch für Feldarbeiten verwendet. Gerade bei Feldarbeiten werden Arbeitsgeräte verwendet, die am Fahrzeug angehängt und über das Feld gezogen werden.

Es kommt somit vor, dass das Fahrzeug mit einem Arbeitsgerät auf dem Feld eine Wende vollziehen muss. Es ist von Vorteil, wenn das Fahrzeug zusammen mit dem Arbeitsgerät einen möglichst kleinen Wendekreis aufweist. Ein kleiner Wendekreis kann etwa durch einen großen Lenkwinkel ermöglicht werden oder durch einen sogenannten Pull-In-Turn, bei dem das Fahrzeug mittels einem Vorlauf der vorderen angelenkten Räder in die Kurve gezogen wird.

Der Vorlauf ergibt sich durch eine leicht höhere Abrollgeschwindigkeit der Vorderreifen im Vergleich zu den Hinterreifen. Auf diese Weise wird erreicht, dass das Fahrzeug nur in geringem Maß von der Hinterachse geschoben und mehrheitlich von der Vorderachse gezogen wird. Der relative Unterschied ist dabei stets in einem engen Toleranzbereich zu halten, da sonst Verschleiß am Antriebsstrang des Fahrzeugs stark erhöht wird.

Die Strategie ist für Kurvenfahrten zweckmäßig, wobei das Fahrzeug aktiv von der Vorderachse in oder durch die Kurve gezogen wird, wodurch der effektive Kurvenradius verringert werden kann im Vergleich zu Fahrzeugen ohne diese Strategie. Dieser Effekt wird unter anderem durch einen Eingriff in die Antriebsstrangsteuerung realisiert. Die Strategie ist besonders hilfreich, wenn das Arbeitsgerät auch während der Fahrzeugwende eine Bodenbearbeitung vornimmt.

Eine weitere Fahrstrategie bei landwirtschaftlichen Fahrzeugen ist die Verwendung einer selektiven Bremse für beide Seiten des Fahrzeugs. Hierzu ist jeweils eine Ansteuerung per Bremspedal für die rechte und linke Fahrzeugseite vorgesehen. Die Bedienperson kann durch einseitiges Bremsen die Räder auf der entsprechenden Fahrzeugseite abbremsen. Durch diese Strategie kann das Fahrzeug passiv gelenkt werden oder, im Fall einer Wende, einen kleineren Kurvenradius beschreiben, so dass die kurvenäußeren Räder mit der ungebremsten Fahrgeschwindigkeit das Fahrzeug um die Kurve ziehen oder schieben.

DE 10 2016 217 616 zeigt ein Antriebsstrangsystem mit einem Verbrennungsmotor, einem Generator, zur Erzeugung elektrischer Energie, der durch den Verbrennungsmotor angetrieben ist, einer elektrischen Maschine, die elektrisch mit dem Generator verbunden ist, mit jeweils einer angetriebenen Vorder- und Hinterachse.

Mit dem Antriebsstrangsystem kann die Antriebsleistung in Form von elektrischer und von mechanischer Leistung an die Vorderachse geleitet werden. Dabei überlagern sich beide Leistungspfade im Umlaufrädergetriebe. Die elektrische Leistung wird nicht durch das Schalt-/Automatikgetriebe geleitet, welches somit für eine kleinere Leistungsanforderung ausgelegt werden kann. Es kann eine Boostfunktion umgesetzt werden, welche im Bedarfsfall über die elektrische Maschine eine zusätzliche kurzzeitig erhöhte elektrische Leistung auf die Vorderachse leitet. Diese ermöglicht, im Fall von kurzfristig benötigter Antriebsleistung, einen zusätzlichen Anteil der Leistung auf dem elektrischen Leistungspfad zur derzeitig anliegenden Anteil elektrischen Antriebsleistung hinzuzufügen.

Die mechanische und elektrische Leistung belasten gleichzeitig den Verbrennungsmotor. Dies führt, besonders bei hohen Drehmomentanforderungen des Fahrzeugs, zu höheren Drehzahlen, einem höheren spezifischen Verbrauch, höheren Betriebskosten und Verschleiß im Antriebsstrang.

Es soll ein Antriebssystem zur Verfügung gestellt werden, das eine Entlastung des Verbrennungsmotors ermöglicht und gleichzeitig Leistung für den Antrieb zur Verfügung stellen kann.

Eine weitere Aufgabe ist die direkte Beeinflussung des Fahrverhaltens durch das Antriebssystem.

Eine zusätzliche Aufgabe ist die Reduzierung von Betriebskosten und Verbrauch an Treibstoff bei erhöhten Drehmomentanforderungen.

Eine zusätzliche Aufgabe ist die Bereitstellung einer Fahrstrategie, besonders im Wendebetrieb eines landwirtschaftlichen Fahrzeugs.

Die Aufgabe wird gelöst durch die Erfindung nach Anspruch 1. Diese umfasst ein Antriebssystem, für ein mehrachsiges Fahrzeug, aufweisend einen Verbrennungsmotor, der wenigstens eine Achse des Fahrzeugs antreibt, wenigstens einen Sekundärantrieb, der sich vom Verbrennungsmotor unterscheidet, der an wenigstens jeder Achse des Fahrzeugs angeordnet ist, wobei der Sekundärantrieb parallel zum Verbrennungsmotor die jeweilige Achse antreibt, eine Steuerung, die den Betrieb des Sekundärantriebs derart regelt, dass bei Abbremsen einer Fahrzeugachse der zugeordnete Sekundärantrieb Antriebsleistung rekuperiert, an einen weiteren Sekundärantrieb übermittelt und dort an zugeordnete Räder abgegeben wird.

Der Verbrennungsmotor kann das landwirtschaftliche Fahrzeug an nur einer, aber auch an mehreren Achsen antreiben. Im Betrieb des Fahrzeugs wird beim Abbremsen aufgrund der Rekuperation durch den Sekundärantrieb ein Anteil der Antriebsleistung zurückgewonnen. Die rekuperierte Leistung wird anschließend auf weitere Räder an weiteren Achsen oder auf ein weiteres Rad derselben Achse mittels eines weiteren Sekundärantriebs geleitet. Bei einer Kurvenfahrt des Fahrzeugs kann mittels des Antriebssystems durch die Leistungsumverteilung die Kurvenfahrt aktiv durch ein höheres Drehmoment oder eine höhere Geschwindigkeit am kurvenäußeren Rad unterstützt und der Wendekreis verringert werden, sowie durch ein gezieltes Abbremsen von kurveninneren Rädern.

Bei kritischen Fahrsituationen des Fahrzeugs, Ausweichmanöver oder Über- und Untersteuern des Fahrzeugs kann durch die Umleitung der Antriebsleistung das Fahrzeug wieder in den unkritischen Fahrzustand gebracht werden, wodurch die Fahrsicherheit erhöht wird.

Die Umleitung der Antriebsleistung kann bei Zugarbeiten dazu verwendet werden, Schlupf oder Vorlauf der jeweils antreibenden Räder oder Achsen einzustellen. Hierbei kann die Antriebsleistung durch den Sekundärantrieb derart umgeleitet werden, dass ein Geschwindigkeitsunterschied zwischen den Rädern oder den Achsen gewährleistet ist, bei dem keine Beschädigung des Antriebsstrangs auftritt. Weiterhin kann hierdurch Reifenverschleiß gesenkt werden. Es ist möglich, hierdurch einer überdurchschnittlichen Kompaktierung des Ackerbodens vorzubeugen.

In einer weiteren Ausführung kann der Sekundärantrieb ein Elektromotor sein.

Der Sekundärantrieb kann an jedem Rad jeder Achse vorgesehen sein. Die Sekundärantriebe können ohne mechanische Umstellung zwischen einem motorischen und generatorischen Betrieb umgeschaltet werden. Der Elektromotor kann eine kleinere Größe aufweisen, wenn dieser als Sekundärantrieb an jedem Rad vorgesehen wird, im Vergleich zu einem Sekundärantrieb, der eine Achse antreibt.

Bei einer Ausbildung kann der Sekundärantrieb ein Hydraulikmotor sein.

Der Sekundärmotor kann eine hohe Leistungsdichte aufweisen im Vergleich zu einem Elektromotor. Hierbei können hohe Antriebsleistungen mit einem geringeren Bauraum übertragen werden. Eventuell vorhandene Hydraulikleitungen im Fahrzeug können verwendet werden, um die Leitungen zwischen den einzelnen Sekundärantrieben zur Verfügung zu stellen.

In einer weiteren Ausführung kann der Sekundärantrieb auch im Generatormodus bzw. als Hydraulikpumpe betrieben werden.

Der Generatormodus erlaubt den generatorischen Betrieb zur Rekuperation der Antriebsleistung. Diese kann mittels Speichermedium für einen späteren Zeitpunkt gespeichert und wieder abgerufen werden. Dies kann durch einen Elektromotor im generatorischen Betrieb umgesetzt werden.

In einer Weiterbildung kann ein Sekundärantrieb wenigstens zweimal an jeder Achse des Fahrzeugs angeordnet sein, so dass je Achse ein Sekundärantrieb für die rechte und linke Fahrzeugseite vorgesehen sind.

Der Sekundärantrieb ermöglicht die Ansteuerung der jeweiligen Fahrzeugseite. Dies kann bei Kurvenfahrt zur Unterstützung des Einlenkens oder des Wendekreises des Fahrzeugs verwendet werden. Die Antriebsleistung kann von einer an die andere Fahrzeugseite geleitet werden, oder von einer Achse an die andere Achse der gleichen Fahrzeugseite um das Abbremsverhalten oder Schlupfverhalten der einzelnen Räder oder Achsen zu beeinflussen.

Bei einer Ausbildung können durch die Steuerung die Sekundärantriebe derart geregelt werden, dass bei Abbremsen des Fahrzeugs auf einer Fahrzeugseite die zugeordneten Sekundärantriebe auf dieser Fahrzeugseite rekuperieren, die rekuperierte Leistung an einen weiteren Sekundärantrieb auf der anderen Fahrzeugseite übermitteln und diese dort an zugeordnete Räder abgegeben wird.

Die Sekundärantriebe ermöglichen die Einsparung von Treibstoff, da diese den Primärantrieb durch die Umleitung von Antriebsleistung entlasten. Die dynamische Fahranpassung kann verbessert werden und das Fahrzeug wird insbesondere bei Zugbetrieb unterstützt durch ein aktives Einlenken von Kurvenfahrten. Bei Geradeausfahrt, etwa bei Feldarbeiten, kann dadurch der Vorlauf der vorderen Räder kontinuierlich angepasst werden, indem Antriebsleistung von hinteren auf die vorderen Räder geleitet wird.

Eine weitere Ausführung der Erfindung umfasst ein Verfahren für ein Antriebssystem für ein mehrachsiges Fahrzeug, aufweisend einen Verbrennungsmotor, der jede Achse des Fahrzeugs antreibt, wenigstens einen Sekundärantrieb, der sich vom Verbrennungsmotor unterscheidet, der an wenigstens jeder Achse des Fahrzeugs angeordnet ist, wobei der Sekundärantrieb parallel zum Verbrennungsmotor die jeweilige Achse antreibt, eine Steuerung, die den Betrieb des Sekundärantriebs derart regelt, dass bei Abbremsen einer Fahrzeugachse der zugeordnete Sekundärantrieb rekuperiert, wobei durch den Sekundärantrieb Antriebsleistung an einer Fahrzeugachse rekuperiert, an einen weiteren Sekundärantrieb einer weiteren Achse übermittelt und an die weitere Achse wieder abgegeben wird.

Eine Weiterbildung umfasst ein Verfahren, wobei wenigstens ein Sekundärantrieb wenigstens zweimal an jeder Achse des Fahrzeugs angeordnet ist, so dass je Achse ein Sekundärantrieb für die rechte und linke Fahrzeugseite vorgesehen sind, so dass durch die Steuerung die Sekundärantriebe derart geregelt werden, dass bei Abbremsen des Fahrzeugs auf einer Fahrzeugseite die zugeordneten Sekundärantriebe auf dieser Fahrzeugseite rekuperieren, die rekuperierte Leistung an einen weiteren Sekundärantrieb auf der anderen Fahrzeugseite übermitteln und diese dort abgegeben.

Das Verfahren kann durch die Rekuperation den Verbrennungsmotor entlasten und weiterhin die Fahreigenschaften des Fahrzeugs verbessern. Durch das Verfahren ist ein aktives Einlenken des Fahrzeuges gewährleistet. Durch die Steuerung kann der Fahrzustand erkannt und die Umleitung der Antriebsleistung kontrolliert werden. Das Verfahren kann eine dynamische Fahrzeugsteuerung ermöglichen, die auch kurzzeitige Eingriffe in die Kontrolle der Antriebsleistung für die jeweiligen Achsen und Fahrzeugseiten erlaubt. Ein "Pull-In-Turn" kann ohne weiteres Eingreifen des Fahrers, etwa starkes Einlenken oder Abbremsen, komfortabel umgesetzt werden und automatisiert ablaufen. Der Fahrer wird dadurch entlastet. In einer weiteren Ausführung kann das Antriebssystem von der Steuerung derart geregelt sein, dass das Fahrzeug bei einer Kurvenfahrt durch Rekuperation von hinteren Achsen zu vorderen Achsen zusätzlich zum Lenkvorgang gesteuert wird.

Mittels der Rekuperation kann eine Hinterachse vollständig vom primären Fahrantrieb abgekoppelt werden, so dass deren Antriebsleistung, die durch Abbremsen zurückgewonnen werden kann, für den Antrieb der weiteren Achsen zur Verfügung gestellt werden kann.

Bei einer weiteren Ausbildung kann das Antriebssystem von der Steuerung derart geregelt sein, dass das Fahrzeug bei einer Kurvenfahrt durch Rekuperation von den Rädern der Kurveninnenseite zu den Rädern der Kurvenaußenseite zusätzlich zum Lenkvorgang gesteuert wird.

Die Abbremsung der kurveninneren Räder erfolgt durch gleichzeitige Rekuperation der Antriebsleistung. Der primäre Fahrzeugantrieb kann bei gleichbleibender Drehzahl betrieben werden, so dass mittels der Umverteilung gleichzeitig ein Einsparen an Treibstoff möglich ist.

Weitere Ausbildungen der Erfindung werden anhand der Figuren erläutert. Dabei zeigt
Fig. 1 eine Gesamtansicht eines Traktors;
Fig. 2 eine Draufsicht eines Traktors mit beispielhaft angehängter Sämaschine;
Fig. 3 einen skizzierten Leistungsverlauf eines bekannten Antriebssystems bei Allradantrieb in Vorwärtsfahrt;
Fig. 4 einen skizzierten Leistungsverlauf eines bekannten Antriebssystems bei Vorderradantrieb in Vorwärtsfahrt;
Fig. 5 einen skizzierten Leistungsverlauf eines bekannten Antriebssystems bei einseitig gebremstem Hinterrad;
Fig. 6 einen skizzierten Leistungsverlauf des erfindungsgemäßen Antriebssystems bei gebremster Hinterachse;
Fig. 7 einen skizzierten Leistungsverlauf des erfindungsgemäßen Antriebssystems bei unterschiedlich gebremsten Hinterrädern.

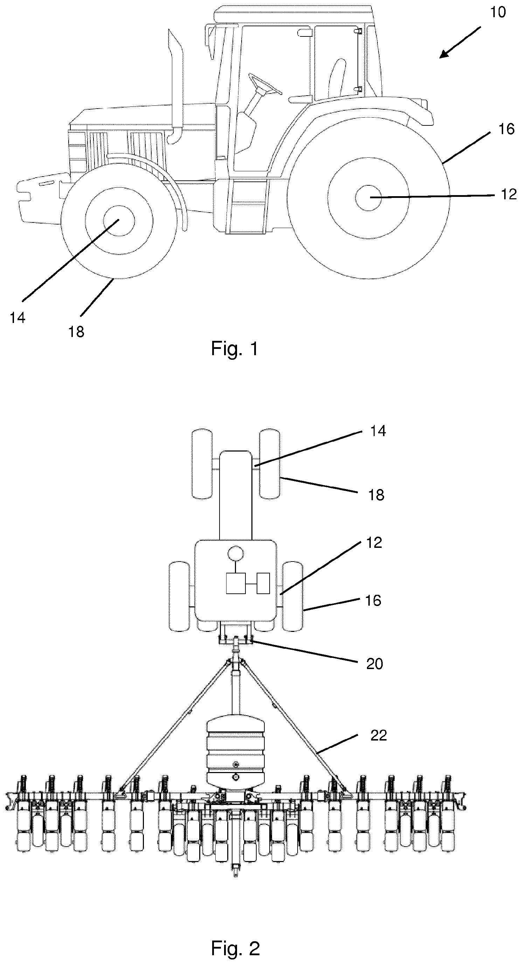

Figur 1 zeigt ein landwirtschaftliches Fahrzeug 10, das sowohl auf öffentlichen Straßen für den Transport von beispielsweise Erntegut eingesetzt wird, als auch für Feldarbeiten, bei denen ein angehängtes Arbeitsgerät 22 zum Einsatz kommt.

Üblicherweise weisen derartige Fahrzeuge eine lenkbare Vorderachse 14 mit Vorderrädern 18 auf. Das Fahrzeuge kann eine oder mehrere Hinterachsen 12 aufweisen, mit jeweils zwei oder mehr Hinterrädern 16 an jeder Achse. Bei Traktoren weisen üblicherweise die Hinterräder 16 einen größeren Durchmesser auf als die Vorderräder 18. Es gibt darüber hinaus Fahrzeuge mit gleichgroßer Bereifung.

Figur 2 zeigt eine Draufsicht auf eine Kombination eines landwirtschaftlichen Fahrzeugs 10 mit angehängtem Arbeitsgerät 22. Dazu wird das Arbeitsgerät 22 über ein Anhängegestänge 20 am Fahrzeug 10 angebracht. Beim Betrieb mit Arbeitsgeräten auf dem Feld ist es notwendig, dass das Fahrzeug 10 am Feldrand eine Wende fährt. Dabei kann die Wende entweder auf dem Feld oder im Feldrandbereich, der üblicherweise nicht bearbeitet wird, vollzogen werden. Durch das angehängte Arbeitsgerät 22 muss eine Zugleistung vom Fahrzeug 10 erbracht werden, um insbesondere bei Arbeitsgeräten mit breitem Arbeitsbereich wirtschaftlichen Betrieb zu ermöglichen.

In der Phase der Geradeausfahrt ist besonders die Zugkraft des Fahrzeugs 10 wichtig, um eine hohe Bearbeitungsgeschwindigkeit zu erlauben. Bei Geradeausfahrt kommt es daher besonders auf den Vorlauf der einzelnen Räder und Achsen an. Bei Bearbeitungen, die eine Wende des Gespanns mit Weiterbearbeitung vorsehen, soll die Zugkraft des landwirtschaftlichen Fahrzeuges auch bei einer Wende erhalten bleiben, um ein effektives Arbeiten zu erlauben. Durch das Einlenken erfolgt jedoch ein Absinken der Zugkraft in die Kurve, so dass mittels "Pull-In-Turn" der Antrieb auf die Vorderachse verstärkt wird. Üblicherweise kann die durch ein zusätzliches Anheben der Leistung des Primärantriebs erfolgen.

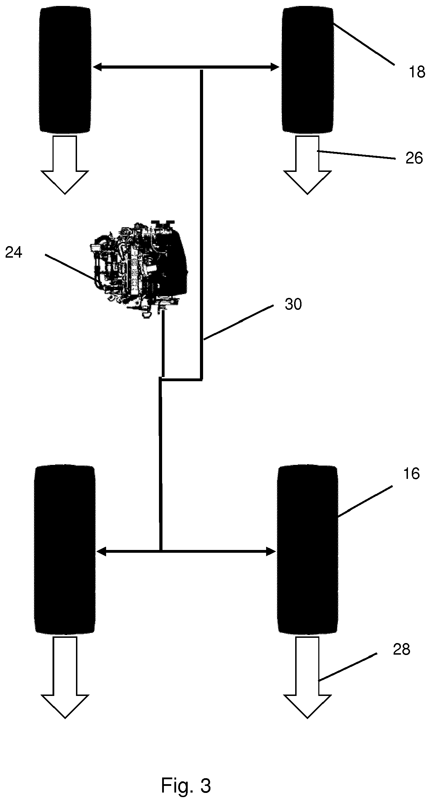

Figur 3 beschreibt die Aufteilung der Antriebskraft bei einer Geradeausfahrt eines bekannten landwirtschaftlichen Fahrzeugs. Die Antriebsenergie wird zunächst vom Primärantrieb 24 erzeugt und über den Antriebskraftpfad 30 zu den Achsen und Rädern geleitet. Dabei kann der Antriebskraftpfad 30 mit einem Getriebe, Wellen und Differential ausgestattet sein, wobei es sich um einen bekannten Aufbau eines Antriebsstrangs handeln kann. Die Vorderräder 18 erzeugen auf der Fahroberfläche eine entsprechende Vorwärtskraft 26, die in Richtung Heck des Fahrzeugs gerichtet ist. Demgemäß erzeugen die Hinterräder 16 eine Vorwärtskraft 28.

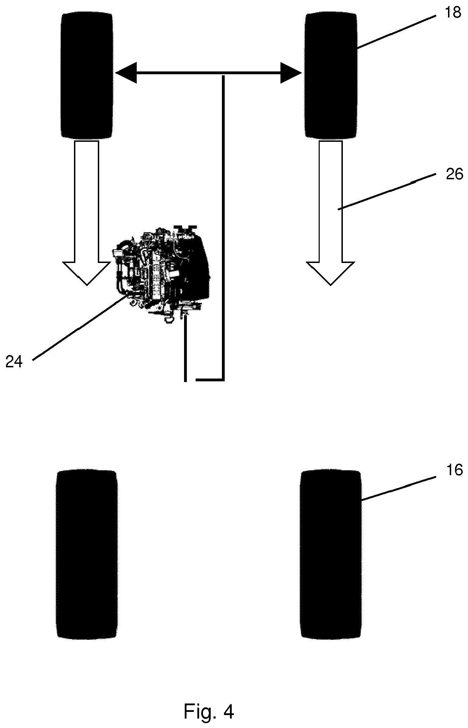

Figur 4 zeigt eine weitere Geradeausfahrt eines landwirtschaftlichen Fahrzeugs 10, wobei jedoch nur die Vorderräder 18 eine Vorwärtskraft 26 erzeugen, so dass es sich um einen Vorderachsantrieb handelt. Durch den Wegfall der Vorwärtskraft 28 der Hinterachse muss die Vorwärtskraft 26 der Vorderachse entsprechend zur Kompensierung vergrößert werden. Dies ist durch eine größere Länge der Pfeile in Figur 4 angedeutet.

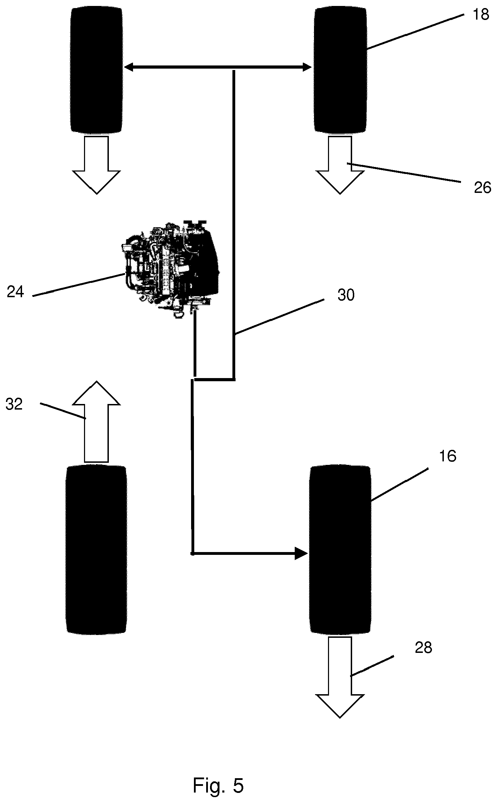

Figur 5 zeigt einen bekannten Ablauf des Kurvenverhaltens bei einem landwirtschaftlichen Fahrzeug 10. Die Antriebskraft wird über den Antriebskraftpfad 30 an sämtlichen Räder 18 und 16 geleitet. Die Vorderräder erzeugen beide eine Vorwärtskraft 26 auf der Fahroberfläche. Die Hinterräder weisen entsprechend ihrer Position unterschiedliche Kräfte auf. Das kurvenäußere Rad 16, in Figur 5 das rechte Hinterrad 16, erzeugt an der Kurvenaußenseite eine Vorwärtskraft 28, so dass das Fahrzeug 10 in die Kurve geschoben wird. Das linke Hinterrad 16, auf der Kurveninnenseite gelegen, erzeugt, geregelt durch eine entsprechende Fahrsteuerung, eine Bremskraft 32, die gegen die Fahrtrichtung gerichtet ist. Dadurch wird das Fahrzeug auf der Innenseite der Kurve gebremst und es entsteht ein zusätzlicher Lenkeffekt durch die angreifenden Kräfte am Fahrzeug. Der Antriebskraftpfad 30 zeigt jedoch, dass die Leistung stets nur vom Primärantrieb 24 zu den Rädern geleitet wird. Die Bremskraft 32 am Hinterrad 18 steht einer weitere Verwendung nicht zur Verfügung und muss zusätzlich vom Primärantrieb 24 aufgebracht werden.

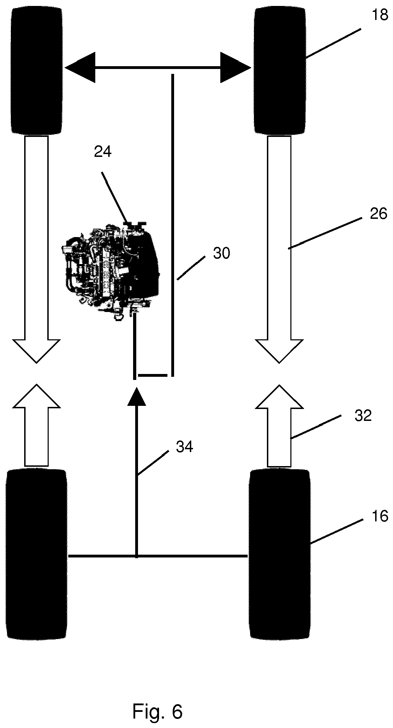

Figur 6 zeigt ein erfindungsgemäßes Antriebssystem. Der Primärantrieb 24 liefert die Antriebsleistung für das Fahrzeug. In der gezeigten Fahrsituation erzeugen die Vorderräder 18 die Vorwärtskraft 26 auf der Fahroberfläche. Die Hinterräder 16 erzeugen eine Bremskraft 32, so dass das Fahrzeug durch die Vorderräder 18 angetrieben ist. Dies kann auch für Kurvenfahrten des Fahrzeugs verwendet werden. Das erfindungsgemäße Antriebssystem erlaubt es, jedes Rad mit einem bemessenen Drehmoment bzw. Antriebsleistung zu versorgen. Figur 6 zeigt, wie es die Erfindung ermöglicht, die Hinterräder 16 abzubremsen und die Antriebsleistung zurückzugewinnen. Im Unterschied zu bekannten Systemen geht dabei die Bremsleistung nicht verloren, sondern wird in den Antriebskraftpfad 30 zurückgespeist. Die so gewonnene Antriebsleistung kann als zusätzliche Antriebsleistung und damit als Vorwärtskraft 26 über die Vorderräder 18 auf die Fahroberfläche geleitet werden. Das Fahrzeug wird durch die Räder der Vorderachse um die Kurve gezogen, entgegen der gebremsten Räder der Hinterachse. Somit wird die Vorderachse mit einer größeren Leistung angetrieben, als durch den Primärantrieb 24 bereitgestellt wird. Das Fahrzeug wird durch die eingelenkten Vorderräder 18 um die Kurve gelenkt und durch diese aufgrund des erfindungsgemäßen Antriebssystems um die Kurve gezogen. Dabei kann der Kurvenradius klein gehalten werden, im Vergleich zu einem bekannten Antriebssystem.

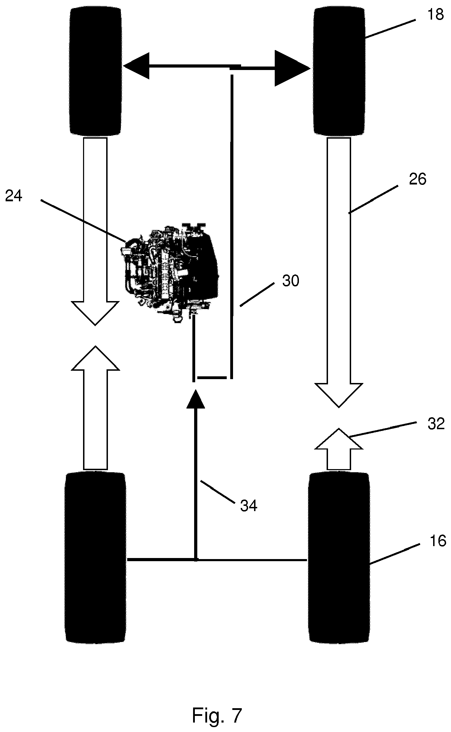

Figur 7 beschreibt die Erfindung in einer weiteren Ausführungsform, bei der eine freie Drehmomentsteuerung, und damit eine frei einstellbare Antriebskraft der jeweiligen Räder der einzelnen Achsen ermöglicht wird. Dadurch kann die Steuerung kurveninnere und - äußere Räder gezielt mit Antriebsleistung beaufschlagen, so dass ein kurvenäußeres Vorderrad 18 stärker angetrieben wird, als ein kurveninneres. Reziprok ist dies bei den hinteren Achsen umgesetzt, so dass ein kurveninneres Hinterrad 16 stärker verzögert wird als ein kurvenäußeres. Entsprechend der Ausführung nach Figur 6 wird Antriebsleistung für jede Verzögerung der Hinterräder 16 zurückgewonnen und an die Vorderräder 18 gemäß ihrer Position bei der Kurvenfahrt abgegeben.

## Patentansprüche

1. Antriebssystem, für ein mehrachsiges Fahrzeug, aufweisend
einen Verbrennungsmotor, der jede Achse des Fahrzeugs antreibt,
wenigstens einen Sekundärantrieb, der sich vom Verbrennungsmotor unterscheidet, der an wenigstens jeder Achse des Fahrzeugs angeordnet ist, wobei der Sekundärantrieb parallel zum Verbrennungsmotor die jeweilige Achse antreibt,
eine Steuerung, die den Betrieb des Sekundärantriebs derart regelt, dass bei Abbremsen einer Fahrzeugachse der zugeordnete Sekundärantrieb Antriebsleistung rekuperiert, an einen weiteren Sekundärantrieb übermittelt und dort an zugeordnete Räder abgegeben wird.

2. Antriebssystem nach Anspruch 1, wobei der Sekundärantrieb ein Elektromotor ist.

3. Antriebssystem nach Anspruch 1, wobei der Sekundärantrieb ein Hydraulikmotor ist.

4. Antriebssystem nach Anspruch 2 oder 3, wobei der Sekundärantrieb auch im Generatormodus bzw. als Hydraulikpumpe betrieben werden kann.

5. Antriebssystem nach einem der vorangehenden Ansprüche, wobei wenigstens ein Sekundärantrieb wenigstens zweimal an jeder Achse des Fahrzeugs angeordnet ist, so dass je Achse ein Sekundärantrieb für die rechte und linke Fahrzeugseite vorgesehen sind.

6. Antriebssystem nach Anspruch 6, wobei durch die Steuerung die Sekundärantriebe derart geregelt werden, dass bei Abbremsen des Fahrzeugs auf einer Fahrzeugseite die zugeordneten Sekundärantriebe auf dieser Fahrzeugseite rekuperieren, die rekuperierte Leistung an einen weiteren Sekundärantrieb auf der anderen Fahrzeugseite übermitteln und diese dort abgegeben wird.

7. Verfahren für ein Antriebssystem für ein mehrachsiges Fahrzeug, aufweisend
einen Verbrennungsmotor, der jede Achse des Fahrzeugs antreibt,
wenigstens einen Sekundärantrieb, der sich vom Verbrennungsmotor unterscheidet, der an wenigstens jeder Achse des Fahrzeugs angeordnet ist, wobei der Sekundärantrieb parallel zum Verbrennungsmotor die jeweilige Achse antreibt,
eine Steuerung, die den Betrieb des Sekundärantriebs derart regelt, dass bei Abbremsen einer Fahrzeugachse der zugeordnete Sekundärantrieb rekuperiert, an einen weiteren Sekundärantrieb übermittelt und dort an zugeordnete Räder abgegeben wird.

8. Verfahren nach Anspruch 7, wobei wenigstens ein Sekundärantrieb wenigstens zweimal an jeder Achse des Fahrzeugs angeordnet ist, so dass je Achse ein Sekundärantrieb für die rechte und linke Fahrzeugseite vorgesehen sind,
so dass durch die Steuerung die Sekundärantriebe derart geregelt werden, dass bei Abbremsen des Fahrzeugs auf einer Fahrzeugseite die zugeordneten Sekundärantriebe auf dieser Fahrzeugseite rekuperieren, die rekuperierte Leistung an einen weiteren Sekundärantrieb auf der anderen Fahrzeugseite übermitteln und diese dort abgegeben wird.

9. Verfahren nach Anspruch 7 oder 8, wobei das Antriebssystem von der Steuerung derart geregelt wird, dass das Fahrzeug bei einer Kurvenfahrt durch Rekuperation von den hinteren Achsen zu der vorderen Achse zusätzlich zum Lenkvorgang gelenkt wird.

10. Verfahren nach einem der Ansprüche 7 bis 9, wobei das Antriebssystem von der Steuerung derart geregelt wird, dass das Fahrzeug bei einer Kurvenfahrt durch Rekuperation von den Rädern der Kurveninnenseite zu den Rädern der Kurvenaußenseite zusätzlich zum Lenkvorgang gelenkt wird.
